(19) Europäisches Patentamt / European Patent Office / Office européen des brevets

(11) **EP 2 789 166 B1**

(12) **FASCICULE DE BREVET EUROPEEN**

(45) Date de publication et mention de la délivrance du brevet:
**08.02.2017 Bulletin 2017/06**

(21) Numéro de dépôt: **12798309.6**

(22) Date de dépôt: **10.12.2012**

(51) Int Cl.:
***H04N 13/02*** *(2006.01)*

(86) Numéro de dépôt international:
**PCT/EP2012/074989**

(87) Numéro de publication internationale:
**WO 2013/083848 (13.06.2013 Gazette 2013/24)**

(54) **PROCEDE DE RECONSTRUCTION 3D D'UNE SCENE FAISANT APPEL A DES CAPTEURS ASYNCHRONES**

VERFAHREN ZUR 3D-REKONSTRUKTION EINES SZENENAUFRUFS MIT ASYNCHRONEN SENSOREN

METHOD OF 3D RECONSTRUCTION OF A SCENE CALLING UPON ASYNCHRONOUS SENSORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.12.2011 FR 1161320**

(43) Date de publication de la demande:
**15.10.2014 Bulletin 2014/42**

(73) Titulaires:
• **Université Pierre et Marie Curie (Paris 6)**
  **75005 Paris (FR)**
• **Centre National de la Recherche Scientifique**
  **75016 Paris (FR)**

(72) Inventeurs:
• **BENOSMAN, Ryad**
  **93500 PANTIN (FR)**
• **CARNEIRO, Joao**
  **F-75006 Paris (FR)**
• **IENG, Sio-Hoï**
  **F-75013 Paris (FR)**

(74) Mandataire: **Parzy, Benjamin Alain et al**
**Cabinet Boettcher**
**16, rue Médéric**
**75017 Paris (FR)**

(56) Documents cités:
**WO-A1-2008/061268**

• **BENOSMAN R ET AL: "Asynchronous Event-Based Hebbian Epipolar Geometry", IEEE TRANSACTIONS ON NEURAL NETWORKS, IEEE SERVICE CENTER, PISCATAWAY, NJ, US, vol. 22, no. 11, 1 novembre 2011 (2011-11-01), pages 1723-1734, XP011411486, ISSN: 1045-9227, DOI: 10.1109/TNN.2011.2167239**
• **PATRICK LICHTSTEINER ET AL: "A 128128 120 dB 15 s Latency Asynchronous Temporal Contrast Vision Sensor", IEEE JOURNAL OF SOLID-STATE CIRCUITS, IEEE SERVICE CENTER, PISCATAWAY, NJ, USA, vol. 43, no. 2, 1 février 2008 (2008-02-01), pages 566-576, XP011200748, ISSN: 0018-9200, DOI: 10.1109/JSSC.2007.914337**

**Description**

L'invention est relative à un procédé de reconstruction 3D d'une scène faisant appel à des capteurs asynchrones.

ARRIERE PLAN DE L'INVENTION

Il est connu de procéder à des reconstructions en trois dimensions à partir d'images prises par au moins deux caméras synchronisées prenant des images de la même scène. Les premiers algorithmes de stéréovision sont apparus dans les années 1970. Des progrès significatifs ont été proposés ces dernières années. Ces progrès portent sur des algorithmes d'appariement de plus en plus efficaces.

Les capteurs optiques utilisés comportent des récepteurs élémentaires (par exemple des pixels d'une caméra) arrangés matriciellement pour voir la scène selon des angles solides respectifs distincts, et capturent des images de la scène à des intervalles réguliers (en général plusieurs images par seconde). Chaque image est alors représentée par un tableau de valeurs (une par récepteur élémentaire) chacune représentative d'une caractéristique physique d'un signal reçu de la scène par le capteur élémentaire correspondant, par exemple une intensité lumineuse.

Plus précisément, de tels capteurs optiques génèrent, à chaque pas de temps $t_k$, et pour chaque récepteur élémentaire placé en x,y, des informations $f_k(x,y) = \delta(t, t_k) \cdot f(x,y,t)$. où f est l'intensité lumineuse perçue par le récepteur placé en x,y, et $\delta$ est le symbole de Kronecker. L'information renvoyée par un tel capteur est alors la matrice ou trame $I_k = \{f_k(x,y)\}, x \in N, y \in M$, où N,M sont les dimensions de la matrice, cette information étant envoyée à chaque pas de temps.

Puis l'algorithme d'appariement recherche dans ces informations des motifs pouvant être dûs à un même élément de la scène et apparie entre eux les capteurs élémentaires correspondants. Connaissant la position de ces récepteurs élémentaires ainsi appariés, il est facile de retrouver par triangulation le point de la scène qui a été vu par ces deux récepteurs élémentaires, et donc de l'intégrer dans la reconstruction 3D de la scène

Chaque image peut représenter une taille de plusieurs mégaoctets, ce au rythme de plusieurs images par seconde (typiquement 24 images par seconde), ce qui représente un débit considérable. Les algorithmes de reconstruction 3D procèdent alors à une recherche de motifs dans les images prises par les différents capteurs au même instant en vue d'apparier entre eux des motifs correspondant à un même élément de la scène. Ces algorithmes requièrent des logiciels gourmands en puissance et en temps de calcul, qui ne sont pas envisageables pour des applications en temps réel.

L'article "Asynchronous Event-Based Hebbian Epipolar Geometry" (Benosman et al., IEEE Transactions on Neural Networks, Col. 22, 11. November 2011) divulgue un système pour produire des images en 3D qui se fonde sur des capteurs d'image de très haute résolution temporelle.

OBJET DE L'INVENTION

L'invention a pour objet un procédé de reconstruction 3D d'une scène permettant une mise en oeuvre en temps réel avec des moyens de calcul raisonnables.

RESUME DE L'INVENTION

En vue de la réalisation de ce but, on propose un procédé de reconstruction 3D d'une scène, comportant :

- la mise en oeuvre d'au moins deux capteurs comportant chacun une série de récepteurs élémentaires arrangés pour observer la scène selon des angles solides respectifs distincts et qui sont chacun sensibles à une caractéristique physique d'un signal reçu par ledit récepteur en provenance de la scène ;
- la mise en oeuvre d'un algorithme de reconstruction 3D comportant une étape d'appariement de récepteurs de chacun des capteurs exploitant des signaux générés par les capteurs ;

Selon l'invention, le procédé comporte l'utilisation de capteurs qui sont chacun adaptés à émettre un flux asynchrone d'évènements qui sont chacun indicatifs d'une modification du signal reçu par l'un des récepteurs élémentaires à un instant donné, l'appariement consistant à apparier entre eux des évènements générés par chacun des capteurs en sélectionnant des évènements temporellement proches.

L'utilisation de tels capteurs permet de diminuer spectaculairement le débit d'information issu des capteurs et simplifie considérablement l'appariement. L'appariement d'évènements temporellement proches revient de fait à apparier les récepteurs sur chacun des capteurs ayant généré les évènements ainsi appariés. L'appariement est très simple à mettre en oeuvre, avec des moyens de traitement modestes.

Le procédé de reconstruction 3D de l'invention peut être mis en oeuvre avec des moyens raisonnables, par exemple un simple ordinateur personnel équipé de cartes d'acquisition idoines.

DESCRIPTION DES FIGURES

L'invention sera mieux comprise à la lumière des figures des dessins annexées, parmi lesquelles :

- La figure 1 est un schéma illustrant les plans focaux de deux capteurs asynchrones observant une même scène selon l'invention ;
- La figure 2 est un chronogramme d'évènements détectés par les capteurs de la figure 1;

- La figure 3 est un schéma illustrant les plans focaux de trois capteurs asynchrones observant une même scène selon l'invention ;
- La figure 4 est un chronogramme d'évènements détectés par les capteurs de la figure 3.

## DESCRIPTION DETAILLEE DE L'INVENTION

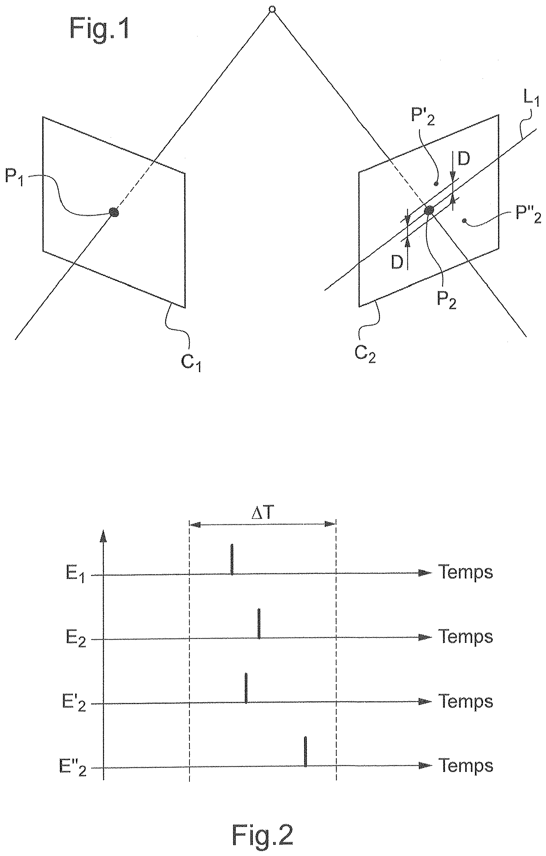

Dans le mode de mise en oeuvre ci-dessous détaillé, en référence à la figure 1, on filme une scène à l'aide de deux capteurs C1 et C2 comportant chacun une caméra CCD ou CMOS (appelées gauche et droites respectivement). Chaque caméra comporte MxN pixels, assimilés chacun à un capteur élémentaire. Chaque pixel voit la scène selon un angle solide donné et est sensible à l'intensité lumineuse reçue dans cet angle solide. Sur la figure 1 sont illustrés les plans focaux des deux capteurs C1 et C2.

Cependant, dans le cadre de l'invention, les caméras ne sont pas utilisées de façon classique. Plutôt que d'utiliser la caméra pour lui faire générer des trames $I_k = \{f_k(x,y)\}, x \in N, y \in M$ à intervalles réguliers dont chaque information élémentaire est représentative de l'intensité lumineuse reçue par chaque pixel à l'instant $t_k$, on s'intéresse ici à une information dérivée, en l'occurrence le sens de variation de l'intensité lumineuse reçue par chacun des pixels. On s'intéresse ainsi à la quantité

$$e(x, y, t) = sign \frac{\partial f}{\partial t}(x, y, t)$$ qui peut prendre deux valeurs : -1 si l'intensité lumineuse du signal reçu par le pixel diminue, et 1 si l'intensité lumineuse du signal reçu par le pixel augmente. On échantillonne cette quantité pour des instants $t_k$ d'échantillonnage:

$$e_k(x, y) = \delta(t, t_k) \cdot sign \frac{\partial f}{\partial t}(x, y, t)$$ où $\delta$ est le

symbole de Kronecker.

Ainsi, cet évènement est indicatif d'une augmentation (+1) ou d'une diminution (-1) de l'intensité lumineuse perçue par le pixel $P_{xy}$ situé en x,y au temps $t_k$.

Une telle information peut par exemple être générée par un post-traitement de l'information d'intensité lumineuse reçue issue de chacun des pixels de la caméra qui est implanté sur une carte de traitement numérique associée à la caméra et qui est implantée soit dans la caméra proprement dite, soit dans l'ordinateur à laquelle la caméra est reliée.

L'information matricielle $I_k = \{f_k(x,y)\}, x \in N, y \in M$ habituellement générée par de telles caméras et exploitées pour la reconstruction 3D dans les procédés connus est alors remplacée selon l'invention par une information matricielle $E_k = \{e_k(x,y)\}, x \in N, y \in M$

Une telle information matricielle est nettement moins gourmande en espace mémoire qu'une image classique, puisque chaque donnée de l'information matricielle est facilement contenue dans un seul octet.

Cependant, plutôt que de transmettre les informations sous forme matricielle, il est possible, selon un aspect particulièrement avantageux de l'invention de transmettre un flux asynchrone d'évènements $E_i$, chaque évènement étant identifié par :

- des données permettant l'identification du pixel dont la quantité e a changé de valeur, en l'occurrence ici les coordonnées x,y du pixel $P_{xy}$ correspondant ;
- l'instant du changement de valeur ;
- un indicateur de la modification du signal perçu par le pixel, prenant en l'occurrence ici la valeur atteinte (-1 ;1) par la quantité e lors de ce changement (ci-après appelée valeur de l'évènement).

Ce flux asynchrone peut se représenter par la notation suivante :

$$\{x_1, y_1, t_1, e_1 ; x_2, y_2, t_2, e_2 ; x_3, y_3, t_3, e_3 ; \ldots \ldots x_n, y_n, t_n, e_n\}$$

où $E_1 = [x_1, y_1, t_1, e_1]$ est le premier évènement, et $E_n[x_n, y_n, t_n, e_n]$ est le n-ième évènement.

Ce flux asynchrone est ici généré par la carte électronique assurant le post-traitement des données de la caméra. Les informations d'identification de chaque évènement sont d'une taille mémoire modeste et peuvent être envoyées de façon séquentielle. Ces informations ne sont bien sûr envoyées que si un évènement E a effectivement été généré, ce qui diminue considérablement le débit nécessaire. En l'absence d'évènement (par exemple scène fixe et caméra fixe), rien n'est envoyé. On a donc ainsi créé un signal asynchrone, pouvant être transmis au moyen d'une simple liaison série, mais contenant suffisamment d'informations pour permettre une reconstruction 3D de la scène, ainsi que cela va être maintenant détaillé.

A cet effet, un procédé d'appariement très simple est mis en oeuvre selon l'invention à partir des évènements générés par les deux capteurs C1, C2 dont les caméras filment la même scène. Le principe de cet appariement consiste à faire l'hypothèse qu'il est très probable que des évènements temporellement proches générés par les deux caméras sont relatifs à un même motif ou point de la scène. On va donc chercher à apparier deux évènements temporellement proches générés par le capteur de gauche et le capteur de droite. On aura ainsi réalisé un appariement tant spatial que temporel.

Cependant, si à un instant donné, un changement d'intensité lumineuse dû par exemple à un mouvement dans la scène affecte tel ou tel pixel sur les deux caméras et génère le cas échéant des évènements pour chacun des capteurs, il est peu probable que les instants d'occurrence de ces évènements coïncident exactement entre eux. Tout d'abord, les caméras présentent un temps de latence pour réagir et générer les évènements, qui varie d'ailleurs souvent pour chacun des pixels. Ensuite, des délais peuvent subvenir dans la génération de l'information et sa transmission. Il s'avère ainsi hasardeux d'apparier des évènements sur la base uniquement d'une coïncidence temporelle exacte d'évènements générés par les deux caméras. Il est cependant possible de sélectionner, pour chaque évènement E$_1$ généré par la caméra de gauche (nommé évènement de gauche, ou évènement source, et dont on voit le pixel correspondant P$_1$ sur la figure 1), un ensemble d'évènements (ici les évènements E$_2$, $E'_2$, $E''_2$, générés par la caméra de droite (nommés évènements de droite et dont on voit les pixels correspondants P$_2$, $P'_2$, P"2) qui sont intervenus dans une fenêtre temporelle ΔT donnée autour de l'instant d'occurrence de l'évènement de gauche comme cela est illustré à la figure 2. On sélectionne ainsi le ou les évènements de droite temporellement proches de l'évènement source. Evidemment, plus la fenêtre temporelle est petite, moins l'ensemble ainsi déterminé contient d'évènements de droite.

Cette sélection préliminaire permet de ne retenir qu'un nombre réduit d'évènements de droite dont l'un sera apparié avec l'évènement de gauche. Le cas échéant, un seul évènement de droite est sélectionné. On a alors réalisé l'appariement recherché. Si ce n'est pas le cas, il s'agit alors de filtrer les évènements de droite pour ne retenir que celui qui correspond à l'évènement de gauche considéré. Pour cela, on applique au moins l'une des procédures de tri suivantes :

- on calcule pour chacun des évènements de droite sélectionnés la distance entre le pixel correspondant et la ligne épipolaire L$_1$ dans le plan focal de la caméra de droite qui correspond au pixel $P_1$ lié à l'évènement de gauche. On élimine alors tous les évènements de droite dont la distance ainsi déterminée est supérieure à une borne D donnée. De préférence, la distance considérée est une distance euclidienne ;
- on élimine tous les évènements de droite sélectionnés n'ayant pas la même valeur que celui de gauche. Ainsi, si l'évènement de gauche correspond à une augmentation d'intensité lumineuse, on ne retiendra que les évènements de droite correspondant également à une augmentation d'intensité lumineuse ;
- on élimine tous les évènements de droite sélectionnés ayant déjà fait l'objet d'un appariement, selon l'application du principe d'unicité.

De préférence, les procédures de tri sont appliquées dans l'ordre indiqué, jusqu'à ne plus retenir qu'un seul évènement de droite. Ces procédures de sélection et de tri sont très peu coûteuses en taille mémoire et temps de calcul, et peuvent dont être facilement mises en oeuvre en temps réel avec des moyens raisonnables, par exemple un simple ordinateur personnel.

L'appariement de deux évènements permet donc de déterminer l'appariement des deux pixels correspondants ainsi que l'instant où ces deux pixels doivent être appariés. Une triangulation classique permet alors de déterminer la position du point de la scène qui a été vu par les deux pixels ainsi appariés.

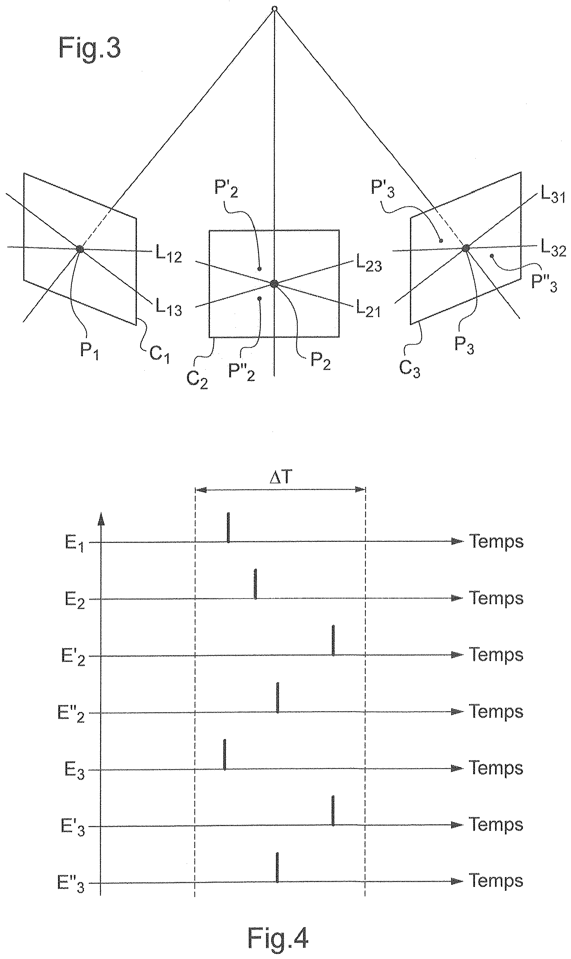

Selon un mode de mise en oeuvre particulièrement avantageux, on utilise au moins trois capteurs pour observer la même scène, comme illustré à la figure 3. L'explication qui suit est relative à l'utilisation de trois capteurs C$_1$,C$_2$,C$_3$ mais elle se généralise aisément à plus de trois capteurs.

L'utilisation d'au moins trois capteurs permet une discrimination fine des évènements. Il faut pour cela connaître les matrices fondamentales F$_{AB}$, F$_{AC}$, F$_{BC}$ liant chaque paire de capteurs.

La mise en oeuvre de la sélection temporelle, comme il est dit auparavant, permet de retenir un certain nombre d'évènements générés par chacun des capteurs et susceptibles de correspondre au même point de la scène.

Par exemple ici, pour l'évènement E$_1$ de pixel P$_1$ dans le plan de C$_1$, ont été sélectionnés les évènements $E_2$, $E'_2$, $E''_2$ de pixels respectifs P$_2$, $P'_2$, $P''_2$ dans le plan de C$_2$, et les évènements $E_3$, $E'_3$, $E''_3$ de pixels respectifs $P''_3$ $P'_3$, dans le plan C$_3$.

Pour déterminer lequel des évènements $E_2$, $E'_2$, $E''_2$ et $E_3$, $E'_3$, $E''_3$) correspondent à l'évènement E$_1$, il suffit de déterminer dans le plan de C$_1$ à l'aide des matrices fondamentales les lignes épipolaires correspondant à chacun de ces évènements dans le plan de C$_1$. Le pixel P$_1$ correspondant à l'évènement est alors à l'intersection de deux lignes épipolaires (ici les lignes L$_{12}$ et L$_{13}$) générées par deux évènements (ici les évènements E$_2$ et E$_3$ de pixels P$_2$ et P$_3$).

Réciproquement, on constate que le pixel P$_2$ est à l'intersection des lignes épipolaires L$_{23}$ et L$_{21}$ générées par les évènements E$_1$ et E$_3$ dans le plan de C$_2$, et que le pixel P$_3$ est à l'intersection des lignes épipolaires L$_{31}$ et L$_{32}$ générées par les évènements E$_1$ et E$_2$ dans le plan de C$_3$. Cette propriété permet de déterminer très rapidement dans les évènements sélectionnés temporellement ceux qui doivent être appariés.

L'invention n'est bien sûr pas limitée à ce qui vient d'être décrit, mais englobe au contraire toute variante entrant dans le cadre défini par les revendications.

Pour mettre en oeuvre la procédure d'appariement, on pourra appliquer ces procédures de tri décrites dans l'ordre indiqué, ou dans un autre ordre. D'autres tris peuvent bien sûr être effectués, du moment que l'on apparie entre eux des évènements temporellement proches.

On pourra bien sûr utiliser d'autres capteurs que des caméras classiques dont le signal est traité pour délivrer des évènements relatifs à des modifications d'intensité lumineuse reçue par les pixels. On pourra par exemple utiliser des capteurs tels que ceux qui sont décrits dans l'article « A 128x128 120 dB 15μs latency

asynchronous temporal contrast vision sensor », P. Lichtsteiner, C. Posch, T. Delbruck, IEEE Journal of Solid State Circuits, Vol. 43, No 2, Février 2008. Ce type de capteur comporte des récepteurs qui, de façon indépendante et en continu, quantifient des changements relatifs d'intensité lumineuse pour générer des évènements. Le capteur délivre par construction un flux asynchrone d'évènements et est tout à fait adapté au procédé de l'invention.

Bien que dans l'exemple décrit le signal perçu par les récepteurs des capteurs est une intensité lumineuse, on pourra bien sûr utiliser des capteurs sensibles à d'autres signaux en provenance de la scène, comme par exemple un rayonnement infrarouge, une intensité sonore, un écho radar...

Bien que la modification du signal perçu par les récepteurs élémentaires est ici quantifiée de façon basique (une première valeur pour une augmentation du signal, et une deuxième valeur pour une diminution du signal), on pourra bien sûr quantifier ces modifications de façon plus élaborée, par exemple par niveaux de gris ou de couleur par niveaux d'intensité lumineuse, au prix d'une augmentation modeste de la taille mémoire de l'indicateur de l'évènement.

Bien sûr, les récepteurs élémentaires peuvent être de véritables récepteurs, disposés pour former ensemble un capteur dont le champ visuel comporte autant de pixels que de récepteurs élémentaires. Cependant, les récepteurs élémentaires peuvent être virtuellement créés en isolant informatiquement des zones élémentaires de la surface du capteur sensible audit signal pour chacune desquelles on détecte une modification d'une caractéristique physique du signal reçu dans ladite zone, et en générant autant de signaux que de zones individualisées. En particulier, l'ensemble des récepteurs formant un même capteur peut affecter n'importe quelle géométrie, non forcément plane. Par exemple, l'ensemble des récepteurs peut être disposé selon une sphère. Dans de telles géométries, la ligne épipolaire liée à un évènement détecté par un autre capteur affectera plus généralement la forme d'une géodésique.

Bien évidemment, le procédé de l'invention s'applique à une scène mobile avec des capteurs fixes aussi bien qu'à une scène fixe avec des capteurs mobiles, par exemples vibrants.

Enfin, le procédé de l'invention se généralise immédiatement à l'utilisation de plus de deux capteurs asynchrones.

**Revendications**

1. Procédé de reconstruction 3D d'une scène mettant en oeuvre :

- au moins deux capteurs ($C_1$,$C_2$) comportant chacun une série de récepteurs élémentaires arrangés pour observer la scène selon des angles solides respectifs distincts et qui sont chacun sensibles à une caractéristique physique d'un signal reçu par ledit récepteur en provenance de la scène, les capteurs étant chacun adaptés à émettre un flux asynchrone d'évènements ($E_i$) qui sont chacun indicatifs d'une modification du signal reçu par l'un des récepteurs élémentaires à un instant donné ;

- un algorithme de reconstruction 3D comportant les étapes de :

• apparier des récepteurs élémentaires de chacun des capteurs exploitant des signaux générés par les capteurs, l'appariement consistant à apparier entre eux des évènements générés par des récepteurs de chacun des capteurs et relatifs à un même élément de la scène ;
• retrouver par triangulation un point de la scène correspondant à cet élément qui a été vu par les deux récepteurs élémentaires qui ont généré les deux évènements retenus, pour l'intégrer dans la reconstruction 3D de la scène ;

**caractérisé en ce que** l'appariement comporte les étapes de :
- effectuer une sélection préliminaire d'évènements temporellement proches en retenant, pour un évènement donné source généré par l'un des capteurs, un ou des évènements générés par l'autre des capteurs qui sont intervenus dans une fenêtre temporelle ($\Delta$T) donnée autour d'un instant d'occurrence de l'évènement source ;
- si la sélection préliminaire retient plusieurs évènements générés par l'autre des capteurs, filtrer lesdits évènements et ne retenir que l'évènement qui correspond à l'évènement source considéré en appliquant une procédure de tri.

2. Procédé selon la revendication 1, dans lequel chaque évènement comprend les données suivantes :

- des données permettant d'identifier le récepteur élémentaire ayant généré l'évènement ;
- un indicateur de la modification du signal perçu par ledit récepteur élémentaire et prenant au moins une première valeur si le signal reçu par le récepteur élémentaire a augmenté, et une deuxième valeur s'il a diminué ;
- l'instant d'occurrence de la modification du signal.

3. Procédé selon la revendication 2, dans lequel les capteurs présentent un plan focal, et dans lequel la procédure de tri comprend :

- pour chaque événement sélectionné, calculer une distance entre un point du plan focal du deuxième capteur correspondant au récepteur élémentaire ayant généré ledit évènement sélectionné et une ligne épipolaire dans ledit plan focal associée au récepteur élémentaire du premier capteur ayant généré l'évènement source,
- éliminer tous les évènements sélectionnés dont la distance ainsi déterminée est supérieure à une borne D donnée.

4. Procédé selon la revendication 2, dans lequel la procédure de tri comprend l'élimination de tous les évènements sélectionnés dont l'indicateur n'a pas la même valeur que l'évènement source.

5. Procédé selon la revendication 2, dans lequel la procédure de tri comprend l'élimination de tous les évènements sélectionnés ayant déjà fait l'objet d'un apparie-ment.

6. Procédé selon la revendication 1, dans lequel on met en oeuvre au moins trois capteurs asynchrones ($C_1$, $C_2$,$C_3$) puis, après sélection temporelle, on retient un évènement généré par chacun des capteurs de sorte que chacun desdits évènements retenus se trouve à l'intersection des lignes épipolaires générées par les autres évènements retenus dans le plan focal correspondant.

7. Procédé selon la revendication 1, dans lequel les capteurs comprennent des caméras de type CCD ou CMOS associées à un post-traitement adapté à générer le flux asynchrone.

8. Procédé selon la revendication 1 dans lequel les capteurs sont du type comportant des récepteurs qui, de façon indépendante et en continu, quantifient des changements relatifs d'intensité lumineuse pour générer des évènements, de sorte à délivrer un flux asynchrone d'évènements.

**Patentansprüche**

1. Verfahren zur 3D-Rekonstruktion einer Szene, das einsetzt:

- mindestens zwei Sensoren ($C_1$, $C_2$), die jeweils eine Reihe von elementaren Empfängern umfassen, die so angeordnet sind, dass sie die Szene aus jeweiligen unterschiedlichen Raumwinkeln betrachten, und die jeweils empfindlich für eine physikalische Eigenschaft eines Signals sind, das von dem Empfänger aus der Szene empfangen wird, wobei die Sensoren jeweils dazu geeignet sind, einen asynchronen Fluss von Ereignissen ($E_i$) auszusenden, die jeweils eine Änderung des von einem der elementaren Empfänger zu einem gegebenen Zeitpunkt empfangenen Signals anzeigen;
- einen 3D-Rekonstruktionsalgorithmus, der die Schritte umfasst:

• Paaren der elementaren Empfänger jedes der Sensoren unter Verwertung der von den Sensoren erzeugten Signale, wobei die Paarbildung darin besteht, Ereignisse miteinander zu paaren, die von den Empfängern jedes der Sensoren erzeugt werden; und die an einem bestimmter Element der Szene entspricht;
• durch Triangulation Finden eines Punktes der Szene, der diesem Element entspricht, das von den zwei elementaren Empfängern gesehen wurde, welche die zwei in Betracht gezogenen Ereignisse erzeugt haben, um ihn in die 3D-Rekonstruktion der Szene zu integrieren;

**dadurch gekennzeichnet, dass** die Paarbildung die Schritte umfasst:
- Treffen einer Vorauswahl von zeitlich nahen Ereignissen, indem für ein gegebenes Quellereignis, das von einem der Sensoren erzeugt wird, ein oder mehr Ereignisse, die von dem anderen der Sensoren erzeugt werden, in Betracht gezogen werden, die in einem gegebenen Zeitfenster ($\Delta T$) um einen Zeitpunkt des Auftretens des Quellereignisses eintreten;
- wenn die Vorauswahl mehrere von dem anderen der Sensoren erzeugte Ereignisse in Betracht zieht, Filtern der genannten Ereignisse und reines Berücksichtigen des Ereignisses, das dem berücksichtigen Quellereignis entspricht, indem ein Sortierverfahren angewandt wird.

2. Verfahren nach Anspruch 1, wobei jedes Ereignis die folgenden Daten umfasst:

- Daten, die ein Identifizieren des elementaren Empfängers ermöglichen, der das Ereignis erzeugt hat,
- einen Indikator zum Anzeigen der Änderung des Signals, das von dem elementaren Empfänger erfasst wurde, und der mindestens einen ersten Wert annimmt, wenn das von dem elementaren Empfänger empfangene Signal zugenommen hat, und einen zweiten Wert, wenn es abgenommen hat;
- den Zeitpunkt des Auftretens der Änderung des Signals.

3. Verfahren nach Anspruch 2, wobei die Sensoren eine Brennebene aufweisen, und wobei das Sortierverfahren umfasst:

- für jedes ausgewählte Ereignis Berechnen eines Abstandes zwischen einem Punkt der Brennebene des zweiten Sensors, der dem elementaren Empfänger entspricht, der das ausgewählte Ereignis erzeugt hat, und einer epipolaren Linie in der Brennebene, die mit dem elementaren Empfänger des ersten Sensors verbunden ist, der das Quellereignis erzeugt hat,
- Beseitigen aller ausgewählten Ereignisse, deren so bestimmter Abstand größer als eine gegebene Grenze D ist.

4. Verfahren nach Anspruch 2, wobei das Sortierverfahren die Beseitigung aller ausgewählten Ereignisse umfasst, deren Indikator nicht den gleichen Wert wie das Quellereignis hat.

5. Verfahren nach Anspruch 2, wobei das Sortierverfahren die Beseitigung aller ausgewählten Ereignisse umfasst, die bereits Gegenstand einer Paarbildung waren.

6. Verfahren nach Anspruch 1, wobei man mindestens drei asynchrone Sensoren (C1, C2, C3) einsetzt und man dann nach einer zeitlichen Auswahl ein Ereignis in Betracht zieht, das von jedem der Sensoren erzeugt wurde, derart, dass jedes der genannten in Betracht gezogenen Ereignisse sich an der Schnittstelle der epipolaren Linien befindet, die von den anderen in Betracht gezogenen Ereignissen in der entsprechenden Brennebene erzeugt werden.

7. Verfahren nach Anspruch 1, wobei die Sensoren CCD- oder CMOS-Kameras umfassen, die mit einer Nachverarbeitung verbunden sind, welche dazu geeignet ist, den asynchronen Fluss zu erzeugen.

8. Verfahren nach Anspruch 1, wobei die Sensoren der Art sind, die Empfänger umfassen, die auf unabhängige und kontinuierliche Weise relative Änderungen der Lichtintensität quantifizieren, um Ereignisse zu erzeugen, so dass ein asynchroner Fluss von Ereignissen ausgegeben wird.

## Claims

1. A method of 3D reconstruction of a scene, using :

- At least two sensors (C1,C2) each including a series of elementary receivers arranged to observe the scene from separate respective solid angles and which are sensitive to a physical characteristic of a signal received by said receiver originating from the scene, the sensors being each adapted to generate a asynchronous stream of events (Ei) which are each indicative of a modification of the signal received by one of the elementary at a given time;
- An 3D reconstruction algorithm including the steps of:

• matching elementary receivers of each of the sensors using signals generated by the sensors, the matching consisting in associating events generated by receivers of each of the sensors and relative to an given element of the scene;
• Find by triangulation a point of the scene corresponding to the element that has been seen by the two elementary receivers which have generated the two associated events, to include it in the 3D reconstruction of the scene;

**Characterized in that** the matching step includes :

- Effecting a preliminary selection of temporally close events by retaining, for a given source event generated by one of the sensors, one or several events generated by the other sensor that took place in given a time window (ΔT) around the source event;

If the preliminary selection retains several events generated by the other sensor, filtering said events to only retain that event who corresponds at the source event by applying a sorting procedure.

2. The method as claimed in claim 1, wherein each event comprises the following data:

- data making it possible to identify the elementary receiver having generated the event;
- an indicator of the modification of the signal perceived by said elementary receiver and taking at least a first value if the signal received by the elementary receiver has increased, and a second value if it has decreased;
- the instant of occurrence of the modification of the signal.

3. The method as claimed in claim 2, wherein the sensors have a focal plane, and wherein the sorting procedure includes :

- for each selected event computing a distance between a point of the focal plane of the second sensor corresponding to the elementary receiver having generated said selected event and an epipolar line in said focal plane associated with the elementary receiver of the first sensor having generated the source event,

- eliminating all the selected events for which the distance thus determined is above a given limit (D).

4. The method as claimed in claim 2, wherein the sorting procedure includes eliminating all the selected events the indicator of which does not have the same value as the source event.

5. The method as claimed in claim 2, wherein the sorting procedure includes eliminating all the selected events having already been the subject of a matching.

6. The method as claimed in claim 1, wherein at least three asynchronous sensors ($C_1$, $C_2$, $C_3$) are implemented then, after temporal selection, an event generated by each of the sensors is retained in such a way that each of said retained events is found at the intersection of the epipolar lines generated by the other retained events in the corresponding focal plane.

7. The method as claimed in claim 1, wherein the sensors comprise cameras of CCD or CMOS type combined with post-processing adapted to generate the asynchronous stream.

8. The method as claimed in claim 1, wherein the sensors are of the type including receivers which, in an independent and continuous way, quantify relative changes in luminous intensity to generate events, in such a way as to deliver an asynchronous stream of events.

Fig.1

$\Delta T$

$E_1$ ———————————————→ Temps

$E_2$ ———————————————→ Temps

$E'_2$ ———————————————→ Temps

$E''_2$ ———————————————→ Temps

Fig.2

Fig.3

Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BENOSMAN et al.** Asynchronous Event-Based Hebbian Epipolar Geometry. *IEEE Transactions on Neural Networks,* 11 Novembre 2011

- **P. LICHTSTEINER ; C. POSCH ; T. DELBRUCK.** A 128x128 120 dB 15$\mu$s latency asynchronous temporal contrast vision sensor. *IEEE Journal of Solid State Circuits,* 02 Février 2008, vol. 43